# EUROPÄISCHE PATENTSCHRIFT

(11) **EP 1 905 522 B1**
(45) Veröffentlichungstag und Bekanntmachung des Hinweises auf die Patenterteilung: **11.05.2011**
(21) Anmeldenummer: 07018563.2
(22) Anmeldetag: 21.09.2007
(51) Int. Cl.: B21D 5/00, B21D 43/00, B23Q 1/03

(54) **Bearbeitungsmaschine mit einstellbarer Auflageeinheit**
Machining unit with adjustable supporting table
Machine à usiner avec une table de support adaptable

(30) Priorität: 27.09.2006 DE 102006047109
(43) Veröffentlichungstag der Anmeldung: 02.04.2008
(73) Patentinhaber: RAS Reinhardt Maschinenbau GmbH, 71065 Sindelfingen (DE)
(72) Erfinder: Kutschker, Wolfgang, 71034 Böblingen (DE)
(74) Vertreter: Hoeger, Stellrecht & Partner Patentanwälte

(56) Entgegenhaltungen:
- EP-A- 0 094 927
- EP-B- 1 015 148
- DE-A1- 19 530 573
- DE-U1- 8 805 081
- DE-U1- 9 313 515

## Beschreibung

Die Erfindung betrifft eine Bearbeitungsmaschine für Flachmaterialteile, umfassend ein Maschinengestell, am Maschinengestell gehaltene Bearbeitungswerkzeuge, eine Auflageeinheit, auf welcher das Flachmaterial für die Zufuhr zu den Bearbeitungswerkzeugen in mindestens einer Hauptzufuhrrichtung auflegbar ist, und eine Steuerung zur Steuerung eines Bearbeitungsablaufs mit den Bearbeitungswerkzeugen, gemäß dem Oberbegriff des Anspruchs 1 (siehe z. B. EP-A-0 094 927).

Derartige Bearbeitungsmaschinen sind aus dem Stand der Technik bekannt.

Bei diesen besteht das Problem, dass bei Vorsehen einer derartigen Auflageeinheit eine Bedienung der Bearbeitungsmaschine ergonomisch ungünstig ist.

Der Erfindung liegt daher die Aufgabe zugrunde, eine Bearbeitungsmaschine der gattungsgemäßen Art derart zu verbessern, dass diese ergonomisch günstig bedienbar ist.

Diese Aufgabe wird durch eine Bearbeitungsmaschine mit den Merkmalen des Anspruchs 1 gelöst.

Mit der variablen Einstellbarkeit der Auflageeinheit besteht die Möglichkeit, dass eine Bedienungsperson die Bearbeitungsmaschine von Seiten der Auflageeinheit bedienen kann, da bei Flachmaterialteilen mit einer geringen Ausdehnung in der Hauptzufuhrrichtung die Ausdehnung der Auflageeinheit entsprechend reduziert werden kann und andererseits bei Flachmaterialteilen mit einer großen Ausdehnung in der Hauptzufuhrrichtung die Ausdehnung der Auflageeinheit vergrößert werden kann.

Prinzipiell ist es möglich die Ausdehnung der Auflageeinheit manuell zu verstellen. Eine besonders günstige Lösung sieht jedoch vor, dass die Auflageeinheit mit einem deren Ausdehnung zwischen dem werkzeugzugewandten und dem werkzeugabgewandten Bereich einstellenden Stellantrieb versehen ist.

Auch ein derartiger Stellantrieb könnte manuell ansteuerbar sein.

Eine besonders günstige Lösung sieht vor, dass der Stellantrieb durch die Steuerung ansteuerbar ist.

Dadurch besteht die Möglichkeit, bereits aufgrund der der Steuerung vorliegenden Daten für die Bearbeitung des Flachmaterialteils die Ausdehnung der Auflageeinheit einzustellen.

Eine besonders günstige Lösung sieht vor, dass die Ausdehnung der Auflageeinheit in der Hauptzufuhrrichtung entsprechend einer Ausdehnung des zu bearbeitenden Flachmaterialteils in der Hauptzufuhrrichtung mittels der Steuerung einstellbar ist.

Damit besteht die Möglichkeit, ohne dass eine Bedienungsperson aktiv einwirken muss, die Auflageeinheit stets so einzustellen, dass das zu bearbeitende Flachmaterialteil auf dieser günstig auflegbar ist und andererseits hat damit durch die variable Einstellung der Auflageeinheit die auf Seiten der Auflageeinheit, insbesondere vor dem werkzeugabgewandten Bereich, stehende Bedienungsperson die Möglichkeit, das Flachmaterialteil sinnvoll zu handhaben.

Insbesondere ist die Steuerung so ausgebildet, dass diese die Ausdehnung der Auflageeinheit in der Hauptzufuhrrichtung so steuert, dass das zu bearbeitende Flachmaterialteil in der Hauptzufuhrrichtung voll auf der Auflageeinheit auflegbar ist.

Wenn das Flachmaterialteil durch die Auflageeinheit auch exakt relativ zu den Bearbeitungswerkzeugen positioniert werden soll, ist vorzugsweise die Auflageeinheit mit Anschlagelementen versehen.

Diese Anschlagelemente könnten prinzipiell unabhängig von den Mitteln zur Einstellung der Ausdehnung der Auflageeinheit angeordnet sein.

Eine besonders günstige Lösung sieht jedoch vor, dass die Auflageeinheit im werkzeugabgewandten Bereich mit Anschlagelementen zur Positionierung des Flachmaterialteils versehen ist.

Prinzipiell könnten dabei die Anschlagelemente noch relativ zum werkzeugabgewandten Bereich und unabhängig von der Position desselben verstellbar sein.

Eine besonders günstige Lösung sieht jedoch vor, dass die Anschlagelemente positionsfest relativ zum werkzeugabgewandten Bereich angeordnet sind und dass eine Positionierung der Anschlagelemente durch Variation der Ausdehnung der Auflageeinheit in der Hauptzufuhrrichtung erfolgt.

Dabei kann die Variation der Ausdehnung der Auflageeinheit in der Hauptzufuhrrichtung nicht nur dazu ausgenutzt werden, die Auflagemöglichkeit für das Flachmaterial zu optimieren, sondern gleichzeitig dazu ausgenutzt werden, die Anschlagelemente in entsprechendem Abstand von den Bearbeitungswerkzeugen zu positionieren, so dass durch die Anschlagelemente exakt die Position des Flachmaterialteils vorgebbar ist und folglich die Einstellbarkeit des werkzeugabgewandten Bereichs durch die Steuerung mehrfache Vorteile bietet.

Besonders günstig ist es dabei, wenn am werkzeugabgewandten Endbereich mehrere, in unterschiedlichem Abstand von den Bearbeitungswerkzeugen aufweisende Anschlagelemente vorgesehen sind.

Mit diesen mehreren Anschlagelementen besteht die Möglichkeit, den Verstellweg für die Position der Anschlagelemente zu reduzieren, da durch Benutzung der unterschiedlichen Anschlagelemente bereits unterschiedliche Grundabstände von den Bearbeitungswerkzeugen vorgebbar sind.

Eine besonders günstige Lösung sieht dabei vor, dass die verschiedenen Anschlagelemente durch die Steuerung einzeln aktivierbar sind, so dass durch die Steuerung bereits das Anschlagelement aktiviert wird, das für die Bearbeitung am günstigsten ist und dann lediglich noch durch Bewegen des werkzeugabgewandten Bereichs die Position dieses Anschlagelements zum Bearbeitungswerkzeug fein eingestellt werden muss.

Prinzipiell ist es denkbar, die gesamte Bearbeitungsmaschine mit einer in Hauptzufuhrrichtung variabel einstellbaren Auflageeinheit zu versehen.

Bei einzelnen Bearbeitungsvorgängen ist es jedoch, insbesondere für die Handhabung der Flachmaterialteile durch eine Bedienungsperson, günstig, wenn in einer Querrichtung zur Hauptzufuhrrichtung auf einer Seite der einstellbaren Auflageeinheit eine hinsichtlich Ihrer Ausdehnung in der Hauptzufuhrrichtung invariable Auflagevorrichtung angeordnet ist.

Eine derartige invariable Auflage lässt sich insbesondere günstig zum Zuführen von Flachmaterialteilen zur Auflageeinheit einsetzen.

Eine weitere vorteilhafte Lösung sieht vor, dass beiderseits der variablen Auflageeinheit eine in der Hauptzufuhrrichtung invariable Auflagevorrichtung angeordnet ist.

Im einfachsten Fall können derartige Auflagevorrichtungen ais kiassische Auflagetische für Flachmaterialteile ausgebildet sein.

Hinsichtlich der konstruktiven Ausbildung einer in der Hauptzufuhrrichtung variabel einstellbaren Auflageeinheit wurden bislang keine näheren Angaben gemacht.

So sieht eine vorteilhafte Lösung vor, dass die variable Auflageeinheit einen im werkzeugabgewandten Bereich angeordneten und sich quer zur Hauptzufuhrrichtung erstreckenden Querträger aufweist.

Ein derartiger Querträger definiert somit in einfacher Weise die Position des werkzeugabgewandten Bereichs.

Um diesen Querträger in der Hauptzufuhrrichtung verstellbar zu führen, ist vorzugsweise vorgesehen, dass der Querträger an seitlichen, sich in Hauptzufuhrrichtung erstreckenden Führungen geführt ist.

Die Führungen liegen dabei beispielsweise seitlich des durch die variable Auflageeinheit definierten Auflagebereichs.

Um den Querträger in der Hauptzufuhrrichtung bewegen zu können, ist vorzugsweise vorgesehen, dass der Querträger durch den Stellantrieb angetrieben in der Hauptzufuhrrichtung verschiebbar ist.

Dabei wäre es beispielsweise denkbar, den Stellantrieb stationär anzuordnen.

Eine konstruktiv besonders einfache und vorteilhafte Lösung sieht vor, dass der Stellantrieb an dem Querträger angeordnet ist und somit mit dem Querträger mitbewegbar ist.

Ferner wurden im Zusammenhang mit der bisherigen Erläuterung der erfindungsgemäßen Auflageeinheit keine näheren Angaben dahingehend gemacht, wie die Auflageeinheit zwischen dem werkzeugzugewandten Bereich und dem werkzeugabgewandten Bereich ausgebildet sein soll.

Prinzipiell wäre es denkbar, zwischen diesen beiden Bereichen keine zusätzlichen Stützen oder Auflagen für die Flachmaterialteile vorzusehen.

Um jedoch die Handhabung der Flachmaterialteile zu erleichtern, insbesondere zu verhindern, dass eines der Flachmaterialteile zwischen dem werkzeugzugewandten Bereich und dem werkzeugabgewandten Bereich hindurchfällt, ist vorzugsweise vorgesehen, dass zwischen dem werkzeugabgewandten Bereich und dem werkzeugzugewandten Bereich Zwischenstützelemente angeordnet sind.

Derartige Zwischenstützelemente könnten beispielsweise durch separate Vorrichtungen zwischen dem werkzeugzugewandten und dem werkzeugabgewandten Bereich - je nach Abstand zwischen diesen - eingesetzt werden.

Eine besonders günstige Lösung sieht jedoch vor, dass die Zwischenstützelemente mit einer Bewegung des werkzeugabgewandten Bereichs in der Hauptzufuhrrichtung gekoppelt sind.

Eine konstruktiv besonders zweckmäßig realisierbare Lösung sieht vor, dass die Zwischenstützelemente bei Bewegung des werkzeugabgewandten Bereichs in der Hauptzufuhrrichtung in verschiedene Positionen zwischen dem werkzeugzugewandten Bereich und dem werkzeugabgewandten Bereich bewegbar sind.

Die Zwischenstützelemente könnten ihrerseits an eigens für diese vorgesehenen Führungen bewegbar geführt sein.

Konstruktiv günstig ist es jedoch, wenn die Zwischenstützelemente an den Führungen für den Querträger geführt sind.

Eine derartige Führung kann vorsehen, dass eigens für die Zwischenstützelemente vorgesehene Führungen an den Führungen für den Querträger gehalten sind oder dass die Zwischenstützelemente unmittelbar selbst in den Führungen für den Querträger geführt sind.

Insbesondere dann, wenn seitlich der Auflageeinheit in der Hauptzufuhrrichtung invariable Auflagevorrichtungen vorgesehen sind, ist es beim Vorsehen eines Querträgers günstig, wenn der Querträger sich bis in die invariablen Auflagevorrichtungen erstreckt.

Dabei kann der Querträger innerhalb der invariablen Auflagevorrichtungen in unterschiedlichster Weise eingesetzt werden.

Eine Möglichkeit sieht vor, dass der Querträger im Bereich der invariablen Auflagevorrichtungen Anschlagelemente trägt, so dass auch variabel einstellbare Anschlagelemente im Bereich der invariablen Auflagevorrichtungen zur Verfügung stehen, um das Werkstück exakt zu positionieren.

Im Zusammenhang mit der bisherigen Erläuterung der einzelnen Merkmale der erfindungsgemäßen Bearbeitungsmaschine wurden keine weiteren Angaben gemacht. So könnten insbesondere die Bearbeitungswerkzeuge beispielsweise Stanz- oder Biegepresswerkzeuge sein.

Eine besonders vorteilhafte Lösung sieht vor, dass die Bearbeitungswerkzeuge Schwenkbiegewerkzeuge für Flachmaterialteile sind.

Insbesondere ist es dabei günstig, wenn die Bearbeitungswerkzeuge durch eine schwenkbare Biegewange sowie eine Oberwange und eine Unterwange zum Einspannen des Flachmaterialteils gestützt sind.

Insbesondere beim Schwenkbiegen mit einer Biegewange besteht aus Gründen der Arbeitssicherheit die Forderung, eine Bedienungsperson möglichst nicht im Bereich der schwenkbaren Biegewange agieren zu lassen.

Aus diesem Grund erweist sich die erfindungsgemäße Lösung beim Schwenkbiegen als besonders günstig, da damit die Möglichkeit besteht, die Bedienungsperson die Bearbeitungsmaschine von seiten des werkzeugabgewandten Bereichs aus betreiben, überwachen und steuern zu lassen.

In diesem Fall ist es aus Gründen der Arbeitssicherheit günstig, wenn die Biegewange in einem durch ein Gehäuse geschützten Biegeraum bewegbar ist.

In diesem Fall ist es daher besonders günstig, wenn eine Bedienseite der Bearbeitungsmaschine auf einer der Auflageeinheit zugewandten Seite des Maschinengestells vorgesehen ist.

Beispielsweise ist in diesem Fall vorgesehen, dass das Maschinengestell auf einer der Auflageeinheit zugewandten Seite eine Bedieneinheit für die Steuerung trägt.

Es wäre aber auch denkbar, dass die Auflageeinheit selbst die Bedieneinheit für die Steuerung trägt.

Vorzugsweise ist die Bedieneinheit so angeordnet, dass sie für eine vor dem werkzeugabgewandten Bereich der Auflageeinheit stehende Bedienungsperson ergonomisch günstig zugänglich ist, dass heißt, in Reichweite der Arme der an dieser Stelle stehenden Bedienungsperson ist.

Eine ergonomisch besonders günstige Bedienung der Bearbeitungsmaschine ist dann möglich, wenn ein mit dem werkzeugabgewandten Bereich mitbewegtes Bedienelement für eine Bedienungsperson vorgesehen ist, mit welchen beispielsweise die einzelnen Bearbeitungsvorgänge auslösbar sind.

Weitere Merkmale der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Darstellung einer Ausführung einer erfindungsgemäßen Bearbeitungsmaschine mit einer Auflageeinheit in einer Zwischenstellung zwischen minimaler Ausdehnung und maximaler Ausdehnung;
- Fig. 2: eine perspektivische Darstellung der Bearbeitungsmaschine mit der Auflageeinheit bei minimaler Ausdehnung;
- Fig. 3: einen Querschnitt durch das erste Ausführungsbeispiel der erfindungsgemäßen Bearbeitungsmaschine bei maximaler Ausdehnung der Auflageeinheit;
- Fig. 4: eine Teildarstellung des ersten Ausführungsbeispiels der erfindungsgemäßen Auflageeinheit mit Querträgern und Zwischenquerträger;
- Fig. 5: einen Schnitt längs Linie 5-5 in Fig. 4;
- Fig. 6: einen Schnitt längs Linie 6-6 in Fig. 5;
- Fig. 7: eine Darstellung ähnlich Fig. 4 bei minimaler Ausdehnung der Auflageeinheit;
- Fig. 8: eine perspektivische Darstellung ähnlich Fig. 4 bei einem zweiten Ausführungsbeispiel der erfindungsgemäßen Bearbeitungsmaschine und
- Fig. 9: eine perspektivische Darstellung ähnlich Fig. 7 bei dem zweiten Ausführungsbeispiel der erfindungsgemäßen Bearbeitungsmaschine.

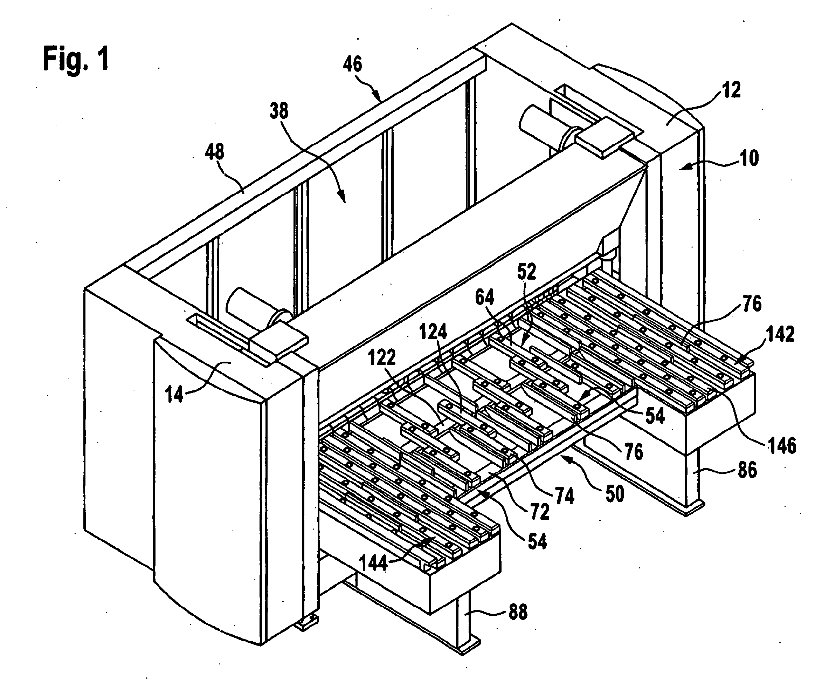

Ein in Figur 1, 2 und 3 dargestelltes erstes Ausführungsbeispiel einer Bearbeitungsmaschine umfasst ein Maschinengestell 10 mit zwei Ständern 12 und 14, zwischen welchen sich eine Unterwange 20 erstreckt, die vorzugsweise mit den Ständern 12 und 14 fest verbunden ist, sowie eine Oberwange 22, die in einer Richtung 24 relativ zur Unterwange 20 bewegbar ist, um ein Flachmaterialteil 26 zwischen die Oberwange 22 und die Unterwange 20 einschieben zu können und auch zwischen der Oberwange 22 und der Unterwange 20 festspannen zu können.

Dabei wirkt die Unterwange 20 mit einem Unterwangenwerkzeug 21 und die Oberwange 22 mit einem Oberwangenwerkzeug 23 auf das Flachmaterialteil 26 ein, um dieses einzuspannen.

Das Flachmaterialteil 26 ist dabei in einer Auflageebene 30 positionierbar und verschiebbar.

Zum Biegen des zwischen der Oberwange 22 und der Unterwange 20 eingespannten Flachmaterialteil 26 ist eine als Ganzes mit 32 bezeichnete Biegewange vorgesehen, welche um eine geometrische Achse 34 relativ zum Maschinengestell 10 verschwenkbar ist, so dass ein Biegewerkzeug 36 der Biegewange 32 in der Lage ist, einen in einen Biegeraum 38 hineinragenden Schenkel 40 des Flachmaterialteils zu biegen.

Vorzugsweise ist dabei die Biegewange 32 so angeordnet und ausgebildet, dass mit dieser ein Biegen des Schenkels 40 in einer Richtung 42 von oben nach unten oder in einer Richtung 44 von unten nach oben möglich ist.

Hierzu erfolgt beispielsweise ein Bewegen der Biegewange entsprechend dem europäischen Patent 0 497 780 Wie in Figur 1 uns 2 dargestellt, ist der Biegeraum 38 nicht frei zugänglich, sondern durch ein Gehäuse 46 geschützt, welches den Biegeraum 38 sowohl im Bereich der Ständer 12 und 14 als auch durch eine im Abstand von der Unterwange 20 und der Oberwange 22 angeordnete Wand 48 umschließt und somit beim Biegen der Flachmaterialteile einen Zutritt von Personen zu dem Biegeraum 38 verhindert.

Um das Flachmaterial 26 zum Biegen in der Auflageebene 30 exakt positionieren zu können, ist eine als Ganzes mit 50 bezeichnete Auflageeinheit vorgesehen, die einen werkzeugzugewandten Bereich 52 aufweist, sowie einen werkzeugabgewandten Bereich 54, die in einer Hauptzufuhrrichtung 56, welche ihrerseits parallel zur Auflageebene 30 und quer, vorzugsweise senkrecht, zur Achse 34 verläuft, im Abstand voneinander angeordnet sind.

Dabei ist vorzugsweise der werkzeugzugewandte Bereich 52 fest mit dem Maschinengestell 10 verbunden und weist beispielsweise einen Querträger 62 auf, der insbesondere an der Unterwange 20 abgestützt ist und sich parallel zur Hauptzufuhrrichtung 56 erstreckende Auflageleisten 64 für das Flachmaterialteil 26 trägt.

Ferner weist der werkzeugabgewandte Bereich 54 einen Querträger 72 auf, welcher ebenfalls sich parallel zur Hauptzufuhrrichtung 56 erstreckende Auflageleisten 74 einerseits sowie Anschlagleisten 76 andererseits trägt.

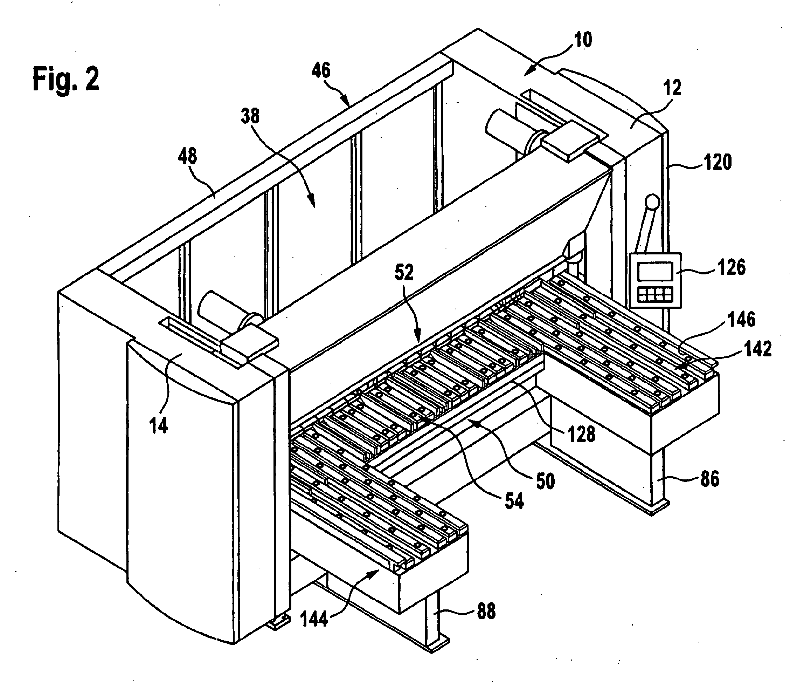

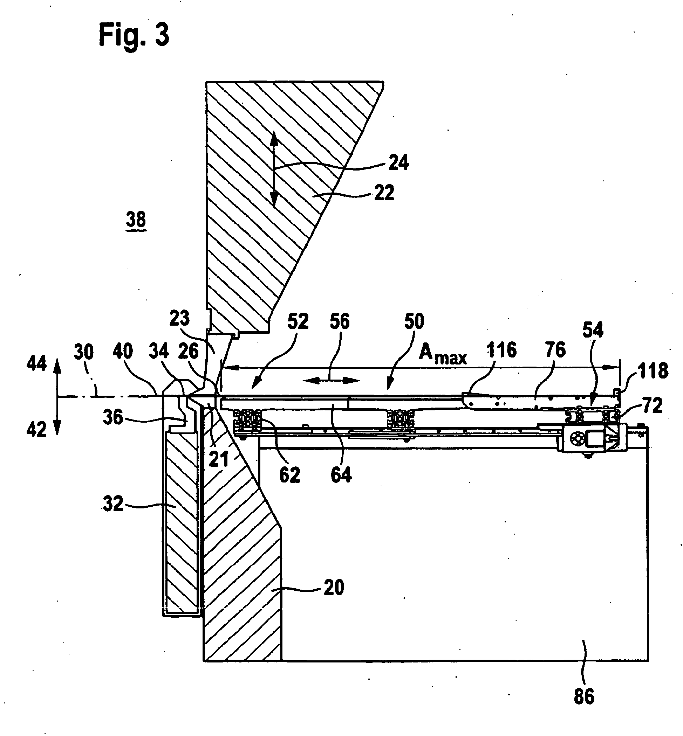

Gemäß dem erfindungsgemäßen Konzept ist der werkzeugabgewandte Bereich 54 der Auflageeinheit 50 und insbesondere der Querträger 72 in der Hauptzufuhrrichtung 56 auf die Unterwange 20 zu bewegbar oder von dieser weg bewegbar, so dass eine Ausdehnung A der Auflageeinheit 50 zwischen einer in Figur 2 dargestellten Minimalausdehnung Amin und einer in Figur 3 dargestellten Maximalausdehnung Aₘₐₓ variierbar ist, um stets eine optimale Ausdehnung der Auflageeinheit 50 für das Auflegen des zu bearbeitenden Flachmaterialteils 26 zu erhalten.

Insbesondere lässt sich diese Variation der Ausdehnung der Auflageeinheit 50 in der Hauptzufuhrrichtung 56 dadurch erreichen, dass der Querträger 72 in der Hauptzufuhrrichtung 56 verfahrbar ist.

Hierzu sind in einer quer zur Hauptzufuhrrichtung 56 verlaufenden Querrichtung 76 im Abstand voneinander zwei Längsführungen 82 und 84 vorgesehen, welche auf Untergestellen 86, 88 sitzen und sich parallel zur Hauptzufuhrrichtung 56 erstrecken.

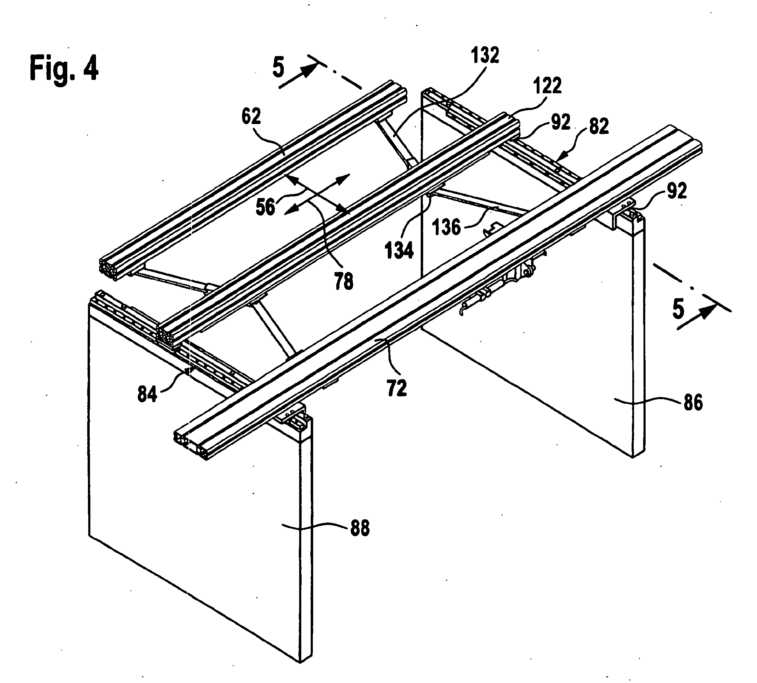

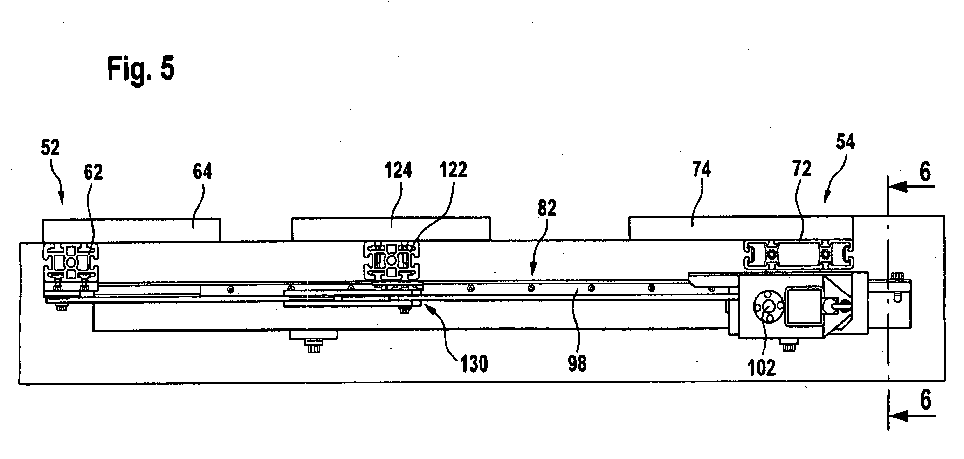

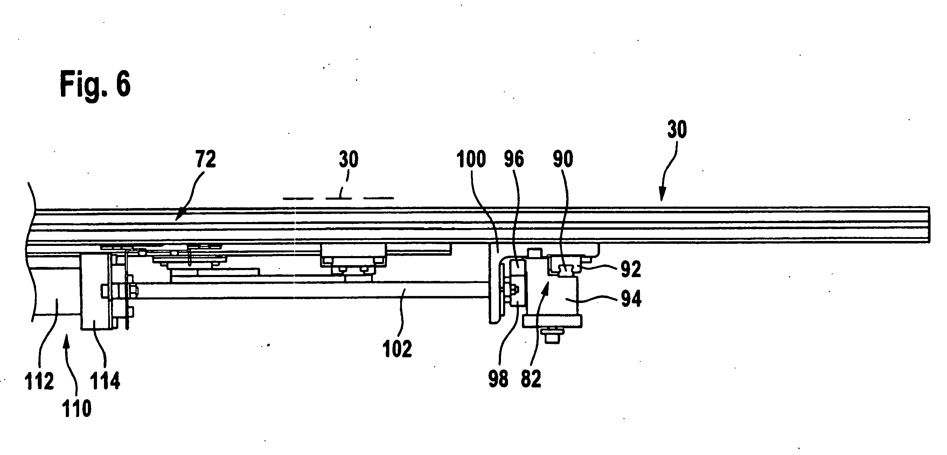

Wie in Figur 4, 5 und 6 dargestellt, umfasst jede dieser Längsführungen 82, 84, in diesem Fall die Längsführung 82, eine Längsführungsschiene 90, an welcher ein Führungswagen 92, beispielsweise rollengelagert, geführt ist.

Ferner sitzt die Längsführungsschiene 90 auf einem Längsträger 94, der außerdem noch eine Zahnstange 96 trägt, wobei mit der Zahnstange 96 kämmend eine Zahnritzel 98 drehbar an einem den Querträger 72 tragenden Lagerkörper 100 angeordnet ist, der seinerseits auch auf dem Führungswagen 92 aufsitzt und durch diesen längs der Längsführungsschiene 90 geführt ist.

Der Lagerkörper 100 lagert dabei eine Antriebswelle 102 eines Verstellantriebs 110, der beispielsweise an dem Querträger auf einer der Auflageebene 30 abgewandten Seite angeordnet ist.

Auf dem Lagerkörper 100 stützt sich der gesamte Querträger 72 und somit bei den dargestellten Ausführungsbeispielen im Wesentlichen der werkzeugabgewandte Bereich 54 ab.

Der Verstellantrieb 110 umfasst beispielsweise einen elektrischen Antriebsmotor 112 sowie ein Getriebe 114 und ist somit in der Lage, durch Antrieb des Zahnritzels 98 über die Antriebswelle 102 den Querträger 72 und somit den werkzeugabgewandten Bereich 54 relativ zum werkzeugzugewandten Bereich 52 in der Hauptzufuhrrichtung 56 zu verschieben und in definierten Stellungen zwischen einer minimalen Ausdehnung Aₘᵢₙ und einer maximalen Ausdehnung Aₘₐₓ zu positionieren.

Da - wie in Figur 3 dargestellt - der den werkzeugabgewandten Bereich 54 der Auflageeinheit 50 tragende Querträger 72 nicht nur die Auflageleisten 74 trägt, sondern auch die Anschlagleisten 76, wird die Verstellbarkeit des werkzeugabgewandten Bereichs 54 und insbesondere des Querträgers 72 gleichzeitig dazu ausgenutzt, die Anschlagleisten 76 und somit deren in Einsatz bringbare Anschlagelemente 116 und 118 zu positionieren, und zwar in Abhängigkeit von der Position des Querträgers 72 relativ zu den Werkzeugen 21 und 23.

Vorzugsweise ist hierzu der Verstellantrieb 110 mit einer Steuerung 120 der Bearbeitungsmaschine gekoppelt, welche primär die Bewegung von Unterwange 20 und Oberwange 22 relativ zueinander steuert und außerdem die Bewegung der Biegewange 32 zum Biegen des Flachmaterialteils 26 steuert. Da hierzu die Position des Flachmaterialteils 26 relativ zu einer durch das Unterwangenwerkzeug 21 und das Oberwangenwerkzeug 23 definierten Biegelinie entscheidend ist, steuert die Steuerung 120 auch über Ansteuern des Verstellantriebs 110 die Position der Anschlagelemente 116 und 118 relativ zu dem Unterwangenwerkzeug 21 und dem Oberwangenwerkzeug 23, und somit letztendlich zu der durch diese Werkzeuge 21, 23 definierten Biegelinie beim Biegen des Flachmaterialteils durch die Biegewange 32, wobei die Steuerung 120 diejenigen der Anschlagelemente 116, 118 auswählt und aktiv schaltet, die aufgrund ihres Abstandes von der Biegelinie geeignet sind.

Damit variiert bedingt durch die Steuerung 120 und die dadurch erfolgende Positionierung der Anschlagelemente 116 oder 118 zwangsläufig auch die Ausdehnung A der Auflageeinheit 50 in der Hauptzufuhrrichtung 56 je nach Größe des zu bearbeitenden Flachmaterialteils 26, wenn man davon ausgeht, dass das Flachmaterialteil 26 auf seiner der zu biegenden Seite gegenüberliegenden Seite an den Anschlagelementen 116 oder 118 abstützen soll um die zu biegende Seite exakt relativ zu dem Unterwangenwerkzeug 21 und dem Oberwangenwerkzeug 23 zu positionieren.

Die Variation der Ausdehnung A der Auflageeinheit 50 in der Hauptzufuhrrichtung 56 zwischen dem werkzeugzugewandten Bereich 52 und dem werkzeugabgewandten Bereich 54 macht es einer Bedienungsperson möglich, die zu bearbeitenden Flachmaterialteile 26 einfach manuell einzulegen und an den Anschlagelementen 116 oder 118 anzulegen und damit relativ zu der den für die Bearbeitung maßgeblichen Werkzeugen 21, 23 und 36 exakt zu positionieren, wobei eine Bedienungsperson die Möglichkeit hat, stets das Flachmaterialteil 26 auf seiner für die Anlage an einem der Anschlagelemente 116 oder 118 vorgesehenen Bereich zu greifen und zu verschieben.

Somit bleibt das Flachmaterialteil 26 für die Handhabung auf der Auflageeinheit 50 stets ergonomisch günstig für die vor dem werkzeugabgewandten Bereich 54, insbesondere nahe dem Querträger 72, stehende Person erreichbar.

Zur zusätzlichen Abstützung des Flachmaterialteils 26 zwischen dem werkzeugzugewandten Bereich 52 und dem werkzeugabgewandten Bereich 54 ist zwischen dem Querträger 62 und dem Querträger 72 ein Zwischenquerträger 122 vorgesehen, welcher seinerseits Auflageleisten 124 trägt.

Dabei wird der Zwischenquerträger 122 durch einen Scherenantrieb 130 stets zwischen dem Querträger 62 und dem Querträger 72, vorzugsweise ungefähr mittig zwischen den beiden, positioniert, unabhängig davon, welchen Abstand der Querträger 72 vom dem Querträger 62 aufweist.

Der Scherenantrieb 130 umfasst dabei, wie in Figur 4 dargestellt, einen gelenkig mit dem Querträger 62 verbundenen Scherenhebel 132, der außerdem gelenkig mit einem Schlitten 134 verbunden ist, welcher in Längsrichtung des Zwischenquerträgers 122 an diesem gleitend geführt ist.

An dem Schlitten 134 ist ferner noch ein Scherenhebel 136 gelenkig gelagert, der seinerseits gelenkig mit dem Querträger 72 verbunden ist.

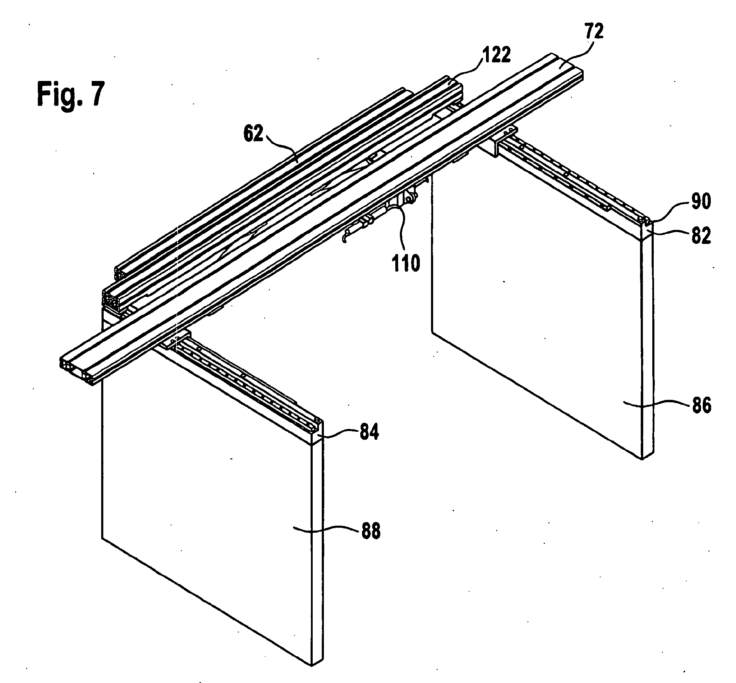

Durch die beiden Scherenhebel 132 und 136 wird somit der längs des Zwischenquerträgers 122 gleitend geführte Schlitten 134 stets in einer Zwischenposition relativ zum Querträger 62 und zum Querträger 72, vorzugsweise ungefähr mittig zwischen diesen, positioniert, wobei bei minimaler Ausdehnung der Auflageeinheit 50, dargestellt in Figur 7, der Zwischenquerträger 122 nahezu an dem Querträger 62 anliegt und der Querträger 72 in einem geringen Abstand von dem Zwischenquerträger 122 angeordnet ist, während bei maximaler Ausdehnung der Auflageeinheit 50, dargestellt in Figur 4, der Querträger 72 den maximalen Abstand vom Querträger 62 aufweist und der Zwischenquerträger 122 ungefähr mittig zwischen diesen steht und durch den Scherenantrieb 130 in dieser Position gehalten wird.

In allen Zwischenstellungen zwischen dem Zustand maximaler Ausdehnung der Auflageeinheit 50 und minimaler Ausdehnung der Auflageeinheit 50 hält der Scherenantrieb 130 den Zwischenquerträger 122 stets im Wesentlichen mittig zwischen dem Querträger 72 und dem Querträger 62.

Vorzugsweise ist auch der Zwischenquerträger 122 auf der Längsführungsschiene 90 mit einem entsprechenden Führungswagen 92 gleitend geführt, so dass keine zusätzliche Führung für die Bewegung des Zwischenquerträgers 122 in der Hauptzufuhrrichtung 56 erforderlich ist.

Vorzugsweise sind, wie in Figur 1 und 2 dargestellt, die Auflageleisten 64, 74 und 124 so an den Querträgern 62, 72 und 122 angeordnet, dass bei dem in Figur 2 und 7 dargestellten Zustand minimaler Ausdehnung der Auflageeinheit 50 die Auflageleisten 64, 74 und 124 nebeneinander liegen und weder über den Querträger 62 noch über den Querträger 72 überstehen, während in Zwischenstellungen zwischen dem Zustand minimaler Ausdehnung der Auflageeinheit 50 in der Hauptzufuhrrichtung 56 und dem Zustand maximaler Ausdehnung der Auflageeinheit 50 in der Hauptzufuhrrichtung 56 die Auflageleisten 64, 74 und 124 abschnittsweise nebeneinander liegen, wie dies in Figur 1 dargestellt ist, so dass sich nach wie vor eine ausreichende Abstützung des zu bearbeitenden Flachmaterialteils 26 auf der Auflageeinheit 50 erreichen lässt.

Vorzugsweise erstreckt sich, wie in Figur 1 und 2 dargestellt, die in Hauptzufuhrrichtung 56 hinsichtlich ihrer Ausdehnung variabel einstellbare Auflageeinheit 50 nicht über die gesamte Ausdehnung der Bearbeitungswerkzeuge 21, 23 und 36 in der Querrichtung 78, sondern vielmehr lediglich über einen Teilbereich derselben.

Vorzugsweise ist die in Hauptzufuhrrichtung 56 variable Auflageeinheit 50 noch ergänzt durch beiderseits in der Querrichtung 78 sich an diese anschließende Auflagetische 142 und 144, welche über ihre gesamte Ausdehnung in der Hauptzufuhrrichtung 56 sich erstreckende Auflageleisten 146 tragen.

Allerdings erstreckt sich der Querträger 72 auch unter die Auflageleisten 146 der Auflagetische 142 und 144 um zwischen diesen Auflageleisten 146 angeordnete Anschlagleisten 76 in der Hauptzufuhrrichtung 56 zu verschieben, so dass die Anschlagleisten 76 über die gesamte Ausdehnung der Auflageeinheit 50 sowie der sich seitlich in der Querrichtung 78 anschließenden Auflagetische 142 und 144 gemeinsam durch Bewegen des Querträgers 72 in der Hauptzufuhrrichtung 56 positionierbar sind.

Vorzugsweise sind die Auflagetische 142 und 144 so ausgebildet, dass in diese die Längsführungen 82 und 84 integriert sind und dass auch die Auflagetische 142 und 144 jeweils von den Untergestellen 86 bzw. 88 getragen werden.

Zur Bedienung der Steuerung 120 ist auf einer der Auflageeinheit 50 zugewandten Seite - wie in Figur 2 dargestellt - des Maschinengestells 10 eine Bedieneinheit 126 angeordnet, die für die vor dem werkzeugabgewandten Endbereich 54 stehende Bedienungsperson noch in Reichweite steht, um die erforderlichen Steuerprogramme aufzurufen.

Ferner ist an dem werkzeugabgewandten Endbereich 54 noch ein Bedienelement 128 angeordnet, das mit dem Endbereich 54 mitbewegbar ist und somit beispielsweise zum Auslösen eines jeden Biegevorgangs ergonomisch günstig betätigt werden kann.

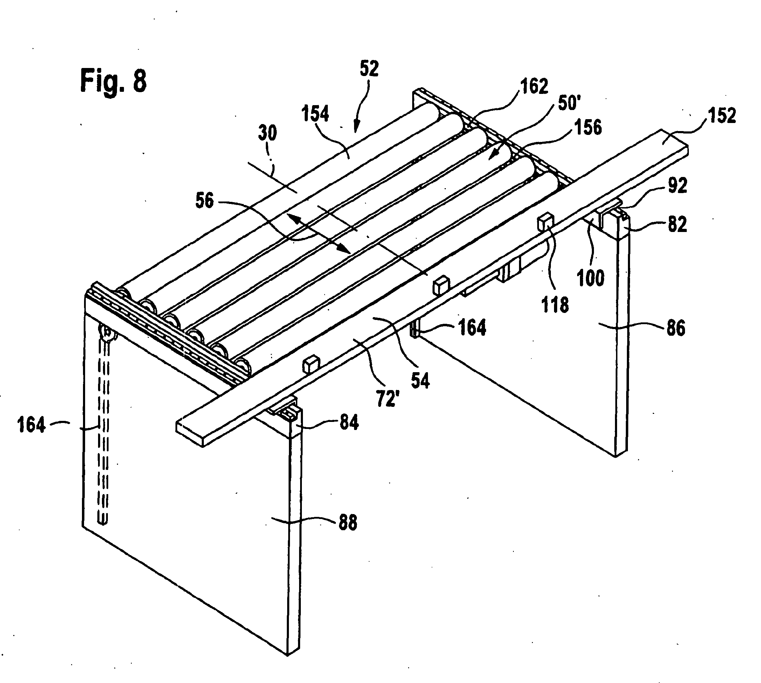

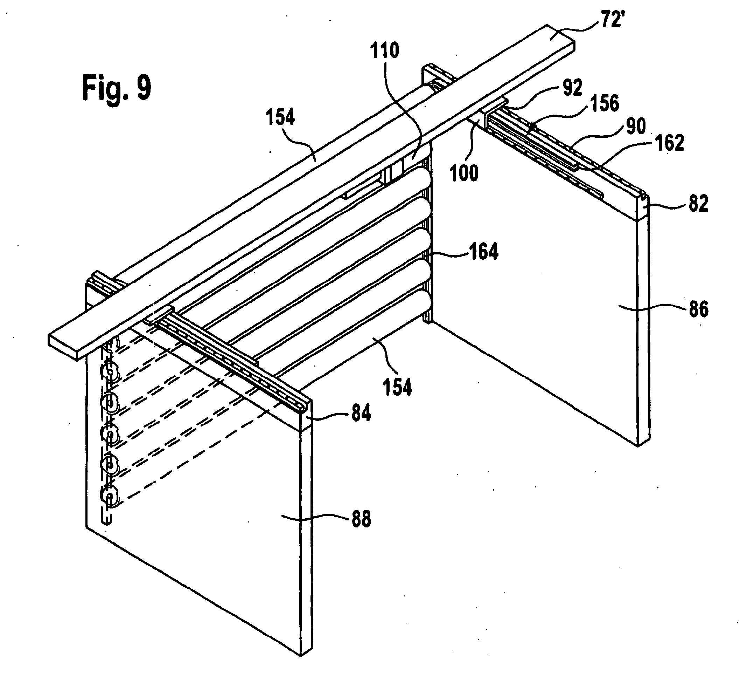

Bei einem zweiten Ausführungsbeispiel einer erfindungsgemäßen Bearbeitungsmaschine ist die Auflageeinheit 50', wie in Figur 8 und 9 dargestellt, auf den Untergestellen 86 und 88 angeordnet, wobei die Untergestelle 86 und 88 jeweils eine Längsführung 82 bzw. 84 tragen, die in gleicher Weise ausgebildet ist wie beim ersten Ausführungsbeispiel.

An dieser Längsführung 82 und 84 ist dann wiederum der Querträger 72 über Führungswagen 92, die an dem Lagerkörper 100 angeordnet sind, geführt.

Der Querträger 72 ist dabei in gleicher Weise wie beim ersten Ausführungsbeispiel bewegbar, er trägt jedoch keine Auflageleisten 74, sondern lediglich Anschlagelemente 118, die über eine Auflagefläche 152 des Querträgers 72 nach oben überstehen.

Ferner wird bei dem zweiten Ausführungsbeispiel der Auflageeinheit 50' die Auflageebene 30 zusätzlich zur Auflagefläche 152 durch in der Hauptzufuhrrichtung 56 aufeinander folgend angeordnete Stützrollen 154 gebildet, welche in einer Stützrollenführung 156 geführt sind, wobei die Stützrollenführung 156 einen parallel zur Hauptzufuhrrichtung 56 verlaufenden Abschnitt 162 sowie einen nahe der Unterwange 20 quer zum Abschnitt 162 verlaufenden Abschnitt 164 aufweist, in welchem die Stützrollen 154 positionierbar sind, die nicht im Abschnitt 162 stehen.

Die jeweils im Abschnitt 162 der Stützrollenführung 156 stehenden Stützrollen 154 tragen dabei zur Abstützung des zu bearbeitenden Flachmaterialteils 26 in der Auflageebene 30 bei, während die übrigen Stützrollen 154 im Abschnitt 164 aufbewahrt werden können.

Die Stützrollen 154 sind dabei beispielsweise durch Zugelemente miteinander und mit dem Querträger 72' verbunden, so dass ein Verfahren des Querträgers 72' von den Bearbeitungswerkzeugen 21, 23, 36 weg dazu führt, dass die Stützrollen 154 sukzessive aus dem Abschnitt 164 in den Abschnitt 162 der Stützrollenführung 156 heraufgezogen werden und durch Führung im Abschnitt 162 zur Auflageebene 30 zwischen der Unterwange 20 und dem Querträger 72' beitragen, wie beispielsweise in Figur 8 dargestellt.

Im Zustand maximaler Ausdehnung der Auflageeinheit 50' in der Hauptzufuhrrichtung 56, sind alle Stützrollen 154 im Abschnitt 162 angeordnet.

Soll dagegen die Ausdehnung der Auflageeinheit 50' in der Hauptzufuhrrichtung 56 minimiert werden, wird der Querträger 72' in Richtung der Bearbeitungswerkzeuge 21, 23, 36 bewegt und dadurch werden die Stützrollen 154 nacheinander von dem Abschnitt 162 in den Abschnitt 164 der Stützrollenführung 156 überführt, wobei die Stützrollen 154 in dem Abschnitt 164 gespeichert werden.

Somit bildet die der Unterwange 20 nächstliegende, noch im Abschnitt 162 stehende Stützrolle 154 den werkzeugzugewandten Bereich 52 der Auflageeinheit 50', während der Querträger 72' mit der Auflagefläche 152 den werkzeugabgewandten Bereich 54 der Auflageeinheit 50 bildet.

## Patentansprüche

1. Bearbeitungsmaschine für Flachmaterialteile (26) umfassend ein Maschinengestell (10), am Maschinengestell (10) gehaltene Bearbeitungswerkzeuge (21, 23, 36), eine Auflageeinheit (50), auf welcher das Flachmaterialteil (26) für die Zufuhr zu den Bearbeitungswerkzeugen (21, 23, 36) in mindestens einer Hauptzufuhrrichtung (56) auflegbar ist und eine Steuerung (120) zur Steuerung eines Bearbeitungsablaufs mit den Bearbeitungswerkzeugen (21, 23, 36), wobei
die Auflageeinheit (50) sich in der Hauptzufuhrrichtung (56) von einem werkzeugzugewandten Bereich (52) zu einem werkzeugabgewandten Bereich (54) ausdehnt, **dadurch gekennzeichnet, dass** die Ausdehnung der Auflageeinheit (50) in der Hauptzufuhrrichtung (56) zwischen dem werkzeugzugewandten Bereich (52) und dem werkzeugabgewandten Bereich (54) variabel einstellbar ist.

2. Bearbeitungsmaschine nach Anspruch 1, **dadurch gekennzeichnet, dass** die Auflageeinheit (50) mit einem deren Ausdehnung zwischen dem werkzeugzugewandten Bereich (52) und dem werkzeugabgewandten Bereich (54) einstellenden Stellantrieb (110) versehen ist.

3. Bearbeitungsmaschine nach Anspruch 2, **dadurch gekennzeichnet, dass** der Stellantrieb (110) durch die Steuerung (120) ansteuerbar ist.

4. Bearbeitungsmaschine nach einem der voranstehenden Ansprüche, **dadurch gekennzeichnet, dass** die Ausdehnung der Auflageeinheit (50) in der Hauptzufuhrrichtung (56) entsprechend einer Ausdehnung des zu bearbeitenden Flachmaterialteils (26) in der Hauptzufuhrrichtung (56) mittels der Steuerung (120) einstellbar ist.

5. Bearbeitungsmaschine nach Anspruch 4, **dadurch gekennzeichnet, dass** die Steuerung (120) die Ausdehnung der Auflageeinheit (50) in der Hauptzufuhrrichtung (56) so steuert, dass das zu bearbeitende Flachmaterialteil (26) in der Hauptzufuhrrichtung (56) voll auf der Auflageeinheit (50) auflegbar ist.

6. Bearbeitungsmaschine nach einem der voranstehenden Ansprüche, **dadurch gekennzeichnet, dass** die Auflageeinheit (50) im werkzeugabgewandten Bereich (54) mit Anschlagelementen (116, 118) zur Positionierung des Flachmaterialteils (26) versehen ist.

7. Bearbeitungsmaschine nach einem der voranstehenden Ansprüche, **dadurch gekennzeichnet, dass** die Anschlagelemente (116, 118) positionsfest relativ zum werkzeugabgewandten Bereich (54) angeordnet sind und dass eine Positionierung der Anschlagelemente (116, 118) durch Variation der Ausdehnung der Auflageeinheit (50) in der Hauptzufuhrrichtung (56) erfolgt.

8. Bearbeitungsmaschine nach Anspruch 6 oder 7, **dadurch gekennzeichnet, dass** am werkzeugabgewandten Bereich (54) mehrere, einen unterschiedlichen Abstand von den Bearbeitungswerkzeugen (21, 23, 36) aufweisende Anschlagelemente (116, 118) vorgesehen sind.

9. Bearbeitungsmaschine nach Anspruch 8, **dadurch gekennzeichnet, dass** die verschiedenen Anschlagelemente (116, 118) durch die Steuerung (120) einzeln aktivierbar sind.

10. Bearbeitungsmaschine nach einem der voranstehenden Ansprüche, **dadurch gekennzeichnet, dass** in einer Querrichtung (78) zur Hauptzufuhrrichtung (56) auf einer Seite der einstellbaren Auflageeinheit (50) eine hinsichtlich ihrer Ausdehnung in der Hauptzufuhrrichtung (56) invariable Auflagevorrichtung (142, 144) angeordnet ist.

11. Bearbeitungsmaschine nach Anspruch 10, **dadurch gekennzeichnet, dass** beiderseits der variablen Auflageeinheit (50) eine in der Hauptzufuhrrichtung (56) invariable Auflagevorrichtung (142, 144) angeordnet ist.

12. Bearbeitungsmaschine nach einem der voranstehenden Ansprüche, **dadurch gekennzeichnet, dass** die variable Auflageeinheit (50) einen im werkzeugabgewandten Bereich (54) angeordneten und sich quer zur Hauptzufuhrrichtung (56) erstreckenden Querträger (72) aufweist.

13. Bearbeitungsmaschine nach Anspruch 12, **dadurch gekennzeichnet, dass** der Querträger (72) an seitlichen sich in Hauptzufuhrrichtung (56) erstreckenden Führungen (82) geführt ist.

14. Bearbeitungsmaschine nach Anspruch 12 oder 13, **dadurch gekennzeichnet, dass** der Querträger (72) durch den Stellantrieb (110) angetrieben in Hauptzufuhrrichtung (56) verschiebbar ist.

15. Bearbeitungsmaschine nach einem der Ansprüche 12 bis 14, **dadurch gekennzeichnet; dass** der Querträger (72) sich bis in die invariable Auflagevorrichtung (142, 144) erstreckt.

16. Bearbeitungsmaschine nach Anspruch 15, **dadurch gekennzeichnet, dass** der Querträger (72) im Bereich der invariablen Auflagevorrichtung (142, 144) Anschlagelemente (116, 118) trägt.

17. Bearbeitungsmaschine nach einem der voranstehenden Ansprüche, **dadurch gekennzeichnet, dass** zwischen dem werkzeugabgewandten Bereich (54) und dem werkzeugzugewandten Bereich (52) Zwischenstützelemente (122) angeordnet sind.

18. Bearbeitungsmaschine nach Anspruch 17, **dadurch gekennzeichnet, dass** die Zwischenstützelemente (122, 154) mit einer Bewegung des werkzeugabgewandten Bereichs (54) in der Hauptzufuhrrichtung (56) gekoppelt sind.

19. Bearbeitungsmaschine nach Anspruch 18, **dadurch gekennzeichnet, dass** die Zwischenstützelemente (122, 154) bei Bewegung des werkzeugabgewandten Bereichs (54) in der Hauptzufuhrrichtung (56) zwischen dem werkzeugzugewandten Bereich (52) und dem werkzeugabgewandten Bereich (54) bewegbar sind.

20. Bearbeitungsmaschine nach einem der Ansprüche 17 bis 19, **dadurch gekennzeichnet, dass** die Zwischenstützelemente (122, 154) an den Führungen (82) für den Querträger (72) geführt sind.

21. Bearbeitungsmaschine nach einem der voranstehenden Ansprüche, **dadurch gekennzeichnet, dass** die Bearbeitungswerkzeuge (21, 23, 36) Schwenkbiegewerkzeuge (36) für die Flachmaterialteile (26) sind.

22. Bearbeitungsmaschine nach Anspruch 21, **dadurch gekennzeichnet, dass** die Bearbeitungswerkzeuge durch eine schwenkbare. Biegewange (32) sowie eine Oberwange (22) und eine Unterwange (20) zum Einspannen des Flachmaterialteils (26) gestützt sind.

23. Bearbeitungsmaschine nach Anspruch 22, **dadurch gekennzeichnet, dass** die Biegewange (32) in einem durch ein Gehäuse (46) geschützten Biegeraum (38) bewegbar ist.

24. Bearbeitungsmaschine nach einem der voranstehenden Ansprüche; **dadurch gekennzeichnet, dass** eine Bedienseite der Bearbeitungsmaschine auf einer der Auflageeinheit (50) zugewandten Seite des Maschinengestells (10) vorgesehen ist.

25. Bearbeitungsmaschine nach einem der voranstehenden Ansprüche, **dadurch gekennzeichnet, dass** das Maschinengestell (10) auf einer der Auflageeinheit (50) zugewandten Seite eine Bedieneinheit (126) für die Steuerung (120) trägt.

26. Bearbeitungsmaschine nach Anspruch 25, **dadurch gekennzeichnet, dass** die Bedieneinheit (126) so angeordnet ist, dass sie für eine vor dem werkzeugabgewandten Bereich (54) der Auflageeinheit (50) stehende Bedienungsperson ergonomisch günstig zugänglich ist.

27. Bearbeitungsmaschine nach einem der voranstehenden Ansprüche, **dadurch gekennzeichnet, dass** ein mit dem werkzeugabgewandten Bereich (54) mitbewegbares Bedienelement (128) für eine Bedienungsperson vorgesehen ist.

## Claims

1. Processing machine for flat material parts (26), comprising a machine frame (10), processing tools (21, 23, 36) held on the machine frame (10), a supporting unit (50), on which the flat material part (26) can be placed for feeding to the processing tools (21, 23, 36) in at least one main feed direction (56), and a controller (120) for controlling a processing sequence using the processing tools (21, 23, 36), the supporting unit (50) extending in the main feed direction (56) from a region (52) towards the tool to a region (54) remote from the tool, **characterized in that** the extent of the supporting unit (50) in the main feed direction (56), between the region (52) towards the tool and the region (54) remote from the tool, is variably adjustable.

2. Processing machine according to Claim 1, **characterized in that** the supporting unit (50) is provided with an adjusting drive (110) adjusting the extent of the supporting unit between the region (52) towards the tool and the region (54) remote from the tool.

3. Processing machine according to Claim 2, **characterized in that** the adjusting drive (110) can be controlled by the controller (120).

4. Processing machine according to any of the preceding claims, **characterized in that** the extent of the supporting unit (50) in the main feed direction (56) can be adjusted by means of the controller (120) to correspond to an extent in the main feed direction (56) of the flat material part (26) to be processed.

5. Processing machine according to Claim 4, **characterized in that** the controller (120) controls the extent of the supporting unit (50) in the main feed direction (56) in such a way that the flat material part (26) to be processed can be placed fully on the supporting unit (50) in the main feed direction (56).

6. Processing machine according to any of the preceding claims, **characterized in that** the supporting unit (50) is provided in the region (54) remote from the tool with stop elements (116, 118) for positioning the flat material part (26).

7. Processing machine according to any of the preceding claims, **characterized in that** the stop elements (116, 118) are disposed in a positionally fixed manner relative to the region (54) remote from the tool and **in that** positioning of the stop elements (116, 118) is effected by variation of the extent of the supporting unit (50) in the main feed direction (56).

8. Processing machine according to Claim 6 or 7, **characterized in that** a number of stop elements (116, 118) at different distances from the processing tools (21, 23, 36) are provided at the region (54) remote from the tool.

9. Processing machine according to Claim 8, **characterized in that** the various stop elements (116, 118) can be individually activated by the controller (120).

10. Processing machine according to any of the preceding claims, **characterized in that** a supporting device (142, 144) that is invariable with respect to its extent in the main feed direction (56) is disposed in a transverse direction (78) with respect to the main feed direction (56) on one side of the adjustable supporting unit (50).

11. Processing machine according to Claim 10, **characterized in that** a supporting device (142, 144) that is invariable in the main feed direction (56) is disposed on both sides of the variable supporting unit (50).

12. Processing machine according to any of the preceding claims, **characterized in that** the variable supporting unit (50) has a cross-member (72) disposed in the region (54) remote from the tool and extending transversely in relation to the main feed direction (56).

13. Processing machine according to Claim 12, **characterized in that** the cross-member (72) is guided on lateral guides (82) extending in the main feed direction (56).

14. Processing machine according to Claim 12 or 13, **characterized in that** the cross-member (72) is displaceable in the main feed direction (56), driven by the adjusting drive (110).

15. Processing machine according to any of Claims 12 to 14, **characterized in that** the cross-member (72) extends up to and into the invariable supporting device (142, 144).

16. Processing machine according to Claim 15, **characterized in that** the cross-member (72) carries stop elements (116, 118) in the region of the invariable supporting device (142, 144).

17. Processing machine according to any of the preceding claims, **characterized in that** intermediate supporting elements (122) are disposed between the region (54) remote from the tool and the region (52) towards the tool.

18. Processing machine according to Claim 17, **characterized in that** the intermediate supporting elements (122, 154) are coupled with a movement of the region (54) remote from the tool in the main feed direction (56).

19. Processing machine according to Claim 18, **characterized in that** the intermediate supporting elements (122, 154) can be moved between the region (52) towards the tool and the region (54) remote from the tool when there is movement of the region (54) remote from the tool in the main feed direction (56).

20. Processing machine according to any of Claims 17 to 19, **characterized in that** the intermediate supporting elements (122, 154) are guided on the guides (82) for the cross-member (72).

21. Processing machine according to any of the preceding claims, **characterized in that** the processing tools (21, 23, 36) are pivoting bending or folding tools (36) for the flat material parts (26).

22. Processing machine according to Claim 21, **characterized in that** the processing tools are supported by a pivotable folding beam (32) as well as an upper beam (22) and a lower beam (20) for clamping the flat material part (26) in place.

23. Processing machine according to Claim 22, **characterized in that** the folding beam (32) is movable in a bending space (38) protected by a housing (46).

24. Processing machine according to any of the preceding claims, **characterized in that** an operating side of the processing machine is provided on a side of the machine frame (10) that is towards the supporting unit (50).

25. Processing machine according to any of the preceding claims, **characterized in that** the machine frame (10) carries an operating unit (126) for the controller (120) on a side towards the supporting unit (50).

26. Processing machine according to Claim 25, **characterized in that** the operating unit (126) is disposed in such a way that it is accessible in an ergonomically favourable manner for an operator standing in front of the region (54) of the supporting unit (50) that is remote from the tool.

27. Processing machine according to any of the preceding claims, **characterized in that** an operating element (128) that can be moved along with the region (54) remote from the tool is provided for an operator.

## Revendications

1. Machine à usiner pour des parties de matériau plat (26) comprenant un bâti de machine (10), des outils d'usinage (21, 23, 36) retenus sur le bâti de machine (10), une unité de support (50) sur laquelle peut être posée la partie de matériau plat (26) pour l'amenée aux outils d'usinage (21, 23, 36) dans au moins un sens d'amenée principal (56) et une commande (120) pour la commande d'un déroulement d'usinage avec les outils d'usinage (21, 23, 36), l'unité de support (50) s'étendant dans le sens d'amenée principal (56) d'une zone (52) tournée vers les outils à une zone éloignée des outils (54), **caractérisée en ce que** l'étendue de l'unité de support (50) dans le sens d'amenée principal (56) entre la zone tournée vers les outils (52) et la zone éloignée des outils (54) peut être adaptée de manière variable.

2. Machine à usiner selon la revendication 1, **caractérisée en ce que** l'unité de support (50) est pourvue d'un mécanisme de commande (110) adaptant son étendue entre la zone (52) tournée vers les outils (52) et la zone éloignée des outils (54).

3. Machine à usiner selon la revendication 2, **caractérisée en ce que** le mécanisme de commande (110) peut être commandé par la commande (120).

4. Machine à usiner selon l'une quelconque des revendications précédentes, **caractérisée en ce que** l'étendue de l'unité de support (50) dans le sens d'amenée principal (56) peut être adaptée selon une étendue de la partie de matériau plat (26) à usiner dans le sens d'amenée principal (56) à l'aide de la commande (120).

5. Machine à usiner selon la revendication 4, **caractérisée en ce que** la commande (120) commande l'étendue de l'unité de support (50) dans le sens d'amenée principal (56) de sorte que la partie de matériau plat (26) à usiner puisse entièrement être posée sur l'unité de support (50) dans le sens d'amenée principal (56).

6. Machine à usiner selon l'une quelconque des revendications précédentes, **caractérisée en ce que** l'unité de support (50) est pourvue dans la zone éloignée des outils (54) d'éléments de butée (116, 118) pour le positionnement de la partie de matériau plat (26).

7. Machine à usiner selon l'une quelconque des revendications précédentes, **caractérisée en ce que** les éléments de butée (116, 118) sont disposés de manière fixe en position par rapport à la zone éloignée des outils (54) et **en ce qu'**un positionnement des éléments de butée (116, 118) est effectué en variant l'étendue de l'unité de support (50) dans le sens d'amenée principal (56).

8. Machine à usiner selon la revendication 6 ou 7, **caractérisée en ce que** plusieurs éléments de butée (116, 118) présentant une distance différente par rapport aux outils d'usinage (21, 23, 36) sont prévus sur la zone éloignée des outils (54).

9. Machine à usiner selon la revendication 8, **caractérisée en ce que** les différents éléments de butée (116, 118) peuvent être activés individuellement par la commande (120).

10. Machine à usiner selon l'une quelconque des revendications précédentes, **caractérisée en ce qu'**un dispositif de support (142, 144) invariable en ce qui concerne son étendue dans le sens d'amenée principal (56) est disposé dans un sens transversal (78) au sens d'amenée principal (56) sur un côté de l'unité de support (50) adaptable.

11. Machine à usiner selon la revendication 10, **caractérisée en ce qu'**un dispositif de support (142, 144) invariable dans le sens d'amenée principal (56) est disposé de part et d'autre de l'unité de support variable (50).

12. Machine à usiner selon l'une quelconque des revendications précédentes, **caractérisée en ce que** l'unité de support (50) variable présente une traverse (72) s'étendant transversalement au sens d'amenée principal (56) et disposée dans la zone éloignée des outils (54).

13. Machine à usiner selon la revendication 12, **caractérisée en ce que** la traverse (72) est guidée sur des guidages (82) latéraux s'étendant dans le sens d'amenée principal (56).

14. Machine à usiner selon la revendication 12 ou 13, **caractérisée en ce que** la traverse (72) peut être déplacée entraînée par le mécanisme de commande (110) dans le sens d'amenée principal (56).

15. Machine à usiner selon l'une quelconque des revendications 12 à 14, **caractérisée en ce que** la traverse (72) s'étend jusque dans le dispositif de support (142, 144) invariable.

16. Machine à usiner selon la revendication 15, **caractérisée en ce que** la traverse (72) porte des éléments de butée (116, 118) dans la zone du dispositif de support (142, 144) invariable.

17. Machine à usiner selon l'une quelconque des revendications précédentes, **caractérisée en ce que** des éléments d'appui intermédiaires (122) sont disposés entre la zone éloignée des outils (54) et la zone tournée vers les outils (52).

18. Machine à usiner selon la revendication 17, **caractérisée en ce que** les éléments d'appui intermédiaires (122, 154) sont couplés à un déplacement de la zone éloignée des outils (54) dans le sens d'amenée principal (56).

19. Machine à usiner selon la revendication 18, **caractérisée en ce que** les éléments d'appui intermédiaires (122, 154) peuvent être déplacés lors du déplacement de la zone éloignée des outils (54) dans le sens d'amenée principal (56) entre la zone tournée vers les outils (52) et la zone éloignée des outils (54).

20. Machine à usiner selon l'une quelconque des revendications 17 à 19, **caractérisée en ce que** les éléments d'appui intermédiaires (122, 154) sont guidés sur les guidages (82) pour la traverse (72).

21. Machine à usiner selon l'une quelconque des revendications précédentes, **caractérisée en ce que** les outils d'usinage (21, 23, 36) sont des outils de presse plieuse (36) pour les parties de matériau plat (26).

22. Machine à usiner selon la revendication 21, **caractérisée en ce que** les outils d'usinage sont soutenus par une barre de pliage (32) pivotante ainsi qu'une barre supérieure (22) et une barre inférieure (20) pour le serrage de la partie de matériau plat (26).

23. Machine à usiner selon la revendication 22, **caractérisée en ce que** la barre de pliage (32) peut être déplacée dans un espace de pliage (38) protégé par un boîtier (46).

24. Machine à usiner selon l'une quelconque des revendications précédentes, **caractérisée en ce qu'**un côté de commande de la machine à usiner est prévu sur un côté tourné vers l'unité de support (50) du bâti de machine (10).

25. Machine à usiner selon l'une quelconque des revendications précédentes, **caractérisée en ce que** le bâti de machine (10) porte une unité de commande (126) pour la commande (120) sur un côté tourné vers l'unité de support (50).

26. Machine à usiner selon la revendication 25, **caractérisée en ce que** l'unité de commande (126) est disposée de sorte qu'un opérateur se tenant devant la zone éloignée des outils (54) de l'unité de support (50) puisse y accéder de manière favorable du point de vue ergonomique.

27. Machine à usiner selon l'une quelconque des revendications précédentes, **caractérisée en ce qu'**un élément de commande (128) pouvant être déplacé avec la zone éloignée des outils (54) est prévu pour un opérateur.
